# EUROPEAN PATENT APPLICATION

(11) **EP 1 798 444 A1**
(43) Date of publication of application: **20.06.2007**
(21) Application number: 05770527.9
(22) Date of filing: 10.08.2005
(51) Int. Cl.: F16H 1/32, B25J 19/00

(54) **SPEED REDUCER INSTALLED AT ARTICULATION OF INDUSTRIAL ROBOT**

(30) Priority: 11.08.2004 JP 2004234559
(71) Applicant: Nabtesco Corporation, Tokyo 105-0022 (JP)
(72) Inventor: KURITA, Masakazu C/O Tsu Plant, Nabtesco Corp., Mie, 514-8533 (JP); HIBINO, Toshiharu C/O Tsu Plant, Nabtesco Corp., Mie, 514-8533 (JP); HIROSE, Jun C/O Tsu Plant, Nabtesco Corp., Mie, 514-8533 (JP)
(74) Representative: Grünecker, Kinkeldey, Stockmair & Schwanhäusser Anwaltssozietät
(86) International application number: PCT/JP2005/014681
(87) International publication number: WO 2006/016616

(57) **Abstract**

A speed reducer 100 to be attached to an articulated portion of an industrial robot includes a first-stage reduction gear mechanism 10 of a spur gear type speed reducing unit and a second-stage reduction gear mechanism 30 of an eccentric rocking type speed reducing unit, and the output from the eccentric rocking type speed reducing unit is extracted from an internal gear member or a support member. When the input speed to the first input gear unit is 2,000 RPM, the output from the eccentric rocking type speed reducing unit is 20 RPM or higher. The reduction ratio of the first-stage reduction gear mechanism is so selected that individual crankshafts may rotate not over 1,000 RPM when the output from the eccentric rocking type speed reducing unit is 20 RPM or higher.

## Description

### Technical Field

The present invention relates to a speed reducer reduced in heat liberation and to be attached to an articulated portion or an industrial robot.

### Background Art

In the prior art, as an articulation driving speed reducer for a robot, there is known a two-stage speed reducer, which has a spur gear at the front-stage unit of an eccentric rocking type speed reducer. This speed reducer is given an effect to avoid the resonance phenomenon of the robot in a precise operation area such as a welding operation, by selecting the reduction ratio of the front-stage unit suitably in relation to the intrinsic frequency of the robot articulation drive system and a motor speed. Therefore, the reduction ratio of the front-stage unit of the speed reducer is selected from the relations to the intrinsic frequency, the motor speed and a necessary total reduction ratio (as referred to Patent Document 1, for example). On the other hand, the output speed of the speed reducer in the prior art is at 0 to about 15 RPM. The motor speed at that time is 0 to about 1,500 RPM so that a heat so high as to raise practical problems in the speed reducer is not liberated. Thus, the reduction ratio of the font-stage spur gear is not selected from the viewpoint considering the heat liberation.
Patent Document 1: JP-A-62-4586

### Disclosure of the Invention

### Problems that the Invention is to Solve

In accordance with the high-speed run of the robot of recent years, however, the output speed of the speed reducer rises to 0 to about 40 RPM, and the working motor speed rises to 0 to about 6,000 RPM. Together with the continuous repeated runs of the robot, a heat so high as to cause practical problems is generated to cause a problem that the speed reducer has its lifetime shortened. The present invention has an object to solve those problems.
The main cause for the heat liberation in the speed reducer has been thought in a common sense to come from the portion of sliding contact of an eccentric rocking type speed reducer, that is, from the meshing contact between the internal teeth of an internal gear member and the external teeth of an external gear member meshing with that internal gear member, but not from the rolling contact portion, that is, from the rotating condition of a crankshaft to engage with the external gear member through a roller bearing.
However, we have found out that the major causes for the aforementioned heat liberation come from the rotating conditions of the crankshafts. In the use of the motor speed (or the input speed to a two-stage speed reducer) of 4,000 RPM and the final output speed of the two-stage speed reducer of 35 RPM, for example, the total reduction ratio is about 1/114. If the front-stage reduction gear mechanism has a reduction ratio of 1/2.5, the rear-stage reduction gear mechanism has a reduction ratio of 1/46 so that the crank speed becomes as high as 1,600 RPM (= 4,000/2.5) thereby to liberate a high heat. By the high-speed rotations of the crankshaft, more specifically, the grease (or the lubricant) is scattered by the centrifugal force so that it does not penetrate into the engaging portions between the crankshaft and the external gear member or into the roller bearing portion thereby to make the lubrication or the heat elimination insufficient. Thus, it has been found out that even the roller bearing portion causes the slippage to have a high heat, and that the iron component in the speed reducer enters the aforementioned engaging portions or the roller bearing portion thereby to promote the heat liberation. Moreover, the heat liberation thus far described lowers the viscosity of the lubricant thereby not only to lower the lubricating performance but also to invite a vicious cycle to further promote the lubricant scattering by the centrifugal force.
The present invention has been conceived on the basis of findings thus far described, and contemplates to solve the aforementioned problems of the prior art by restricting the speed of the crankshaft thereby to minimize the scattering of the grease from the aforementioned engaging portions or the roller bearing portion.

### Means for Solving Problems

(1) According to a first aspect of the invention, there is provided a speed reducer to be attached to an articulated portion of an industrial robot, comprising a first-stage reduction gear mechanism and a second-stage reduction gear mechanism, wherein the first-stage reduction gear mechanism is a speed reducer for reducing the speed of rotations from a motor and transmitting the speed-reduced rotations to the second-stage reduction gear mechanism, wherein the second-stage reduction gear mechanism is an eccentric rocking type speed reducer including an internal gear member, an external gear member meshing with the internal gear member, a crankshaft engaging with the external gear member for eccentrically rocking the external gear member with respect to the internal gear member, and a support member for supporting the crankshaft rotatably, so that an output is extracted from the internal gear member or the support member, and wherein the output from the eccentric rocking type speed reducer is rotated at 20 RPM or higher, when the input speed of the first-stage reduction gear mechanism is 2, 000 RPM or higher, characterized in that the crankshaft is rotated at a speed of 1, 000 RPM or lower, when the output from the eccentric rocking type speed reducer is 20 RPM or higher.

(2) According to a second aspect of the invention, there is provided a speed reducer to be attached to an articulated portion of an industrial robot, comprising a first-stage reduction gear mechanism and a second-stage reduction gear mechanism, wherein the first-stage reduction gear mechanism is a speed reducer for reducing the speed of rotations from a motor and transmitting the speed-reduced rotations to the second-stage reduction gear mechanism, wherein the second-stage reduction gear mechanism is an eccentric rocking type speed reducer including an internal gear member, an external gear member meshing with the internal gear member, a crankshaft engaging with the external gear member for eccentrically rocking the external gear member with respect to the internal gear member, and a support member for supporting the crankshaft rotatably, so that an output is extracted from the internal gear member or the support member, and wherein the output from the eccentric rocking type speed reducer is rotated at 20 RPM to 40 RPM, when the input speed of the first-stage reduction gear mechanism is 2, 000 RPM to 4, 000 RPM, characterized in that the crankshaft is rotated at a speed of 1,000 RPM or lower, when the output from the eccentric rocking type speed reducer is 20 RPM to 40 RPM.

(3) According to a third aspect of the invention, there is provided a speed reducer to be attached to an articulated portion of an industrial robot, comprising a first-stage reduction gear mechanism and a second-stage reduction gear mechanism, wherein the first-stage reduction gear mechanism is a speed reducer for reducing the speed of rotations from a motor and transmitting the speed-reduced rotations to the second-stage reduction gear mechanism, wherein the second-stage reduction gear mechanism is an eccentric rocking type speed reducer including an internal gear member, an external gear member meshing with the internal gear member, a crankshaft engaging with the external gear member for eccentrically rocking the external gear member with respect to the internal gear member, and a support member for supporting the crankshaft rotatably, so that an output is extracted from the internal gear member or the support member, and wherein the output from the eccentric rocking type speed reducer is rotated at 20 RPM to 40 RPM, when the input speed of the first-stage reduction gear mechanism is 4, 001 RPM to 6,000 RPM, characterized in that the crankshaft is rotated at a speed of 1,000 RPM or lower, when the output from the eccentric rocking type speed reducer is 20 RPM to 40 RPM.

(4) In a speed reducer to be attached to an articulated portion of an industrial robot, according to the invention, it is preferred that the first-stage reduction gear mechanism has a reduction ratio of 1/3 to 1/6.5.

(5) In a speed reducer to be attached to an articulated portion of an industrial robot, according to the invention, it is preferred that the second-stage reduction gear mechanism has a reduction ratio of 1/20 to 1/60.

(6) In a speed reducer to be attached to an articulated portion of an industrial robot, according to the invention, it is preferred that the total reduction ratio or the product of the reduction ratio of the first-stage reduction gear mechanism and the reduction ratio of the second-stage reduction gear mechanism is 1/90 to 1/300.

(7) In a speed reducer to be attached to an articulated portion of an industrial robot, according to the invention, it is preferred that the total reduction ratio or the product of the reduction ratio of the first-stage reduction gear mechanism and the reduction ratio of the second-stage reduction gear mechanism is 1/90 to 1/200.

(8) In a speed reducer to be attached to an articulated portion of an industrial robot, according to the invention, it is preferred that the total reduction ratio or the product of the reduction ratio of the first-stage reduction gear mechanism and the reduction ratio of the second-stage reduction gear mechanism is 1/150 to 1/300.

(9) In a speed reducer to be attached to an articulated portion of an industrial robot, according to the invention, it is preferred that the output from the eccentric rocking type speed reducer is 30 RPM to 40 RPM. Effects of the Invention

In a speed reducer to be attached to the articulated portion of an industrial robot, according to the invention, the reduction ratio of a first-stage reduction gear mechanism is selected to restrict the rotations of a crankshaft of an eccentric rocking type speed reducer or a second-stage reduction gear mechanism. Thus, the speed reducer is suppressed, even in case it is attached to the articulated portion of the industrial robot and enhanced in its input or output speed, in its heat liberation so that its lifetime is prevented from becoming short.

### Brief Description of the Drawings

Fig. 1 is an entire view of an industrial robot 50.
Fig. 2 is a diagram showing a sectional structure of a speed reducer attached to the articulated portion of an industrial robot according to a first embodiment of the invention.
Fig. 3 is a view expressing the diagram of Fig. 2 in a specific structure.
Fig. 4 is a sectional view taken along arrows IV - IV of Fig. 3.
Fig. 5 is a diagram showing the individual sections of arrows V - V of Fig. 2 and Fig. 3 schematically.
Fig. 6 is a diagram showing the drive systems of articulated portions 54, 55 and 56 of Fig. 1.
Fig. 7 is a diagram showing a sectional structure of a speed reducer attached to the articulated portion of an industrial robot according to a second embodiment of the invention.
Fig. 8 is a diagram showing a sectional structure of a speed reducer attached to the articulated portion of an industrial robot according to a third embodiment of the invention.
Fig. 9 is a diagram showing a sectional structure of a speed reducer attached to the articulated portion of an industrial robot according to a fourth embodiment of the invention.

### Best Mode for Carrying Out the Invention

Embodiments of the invention are described in the following with reference to the accompanying drawings.

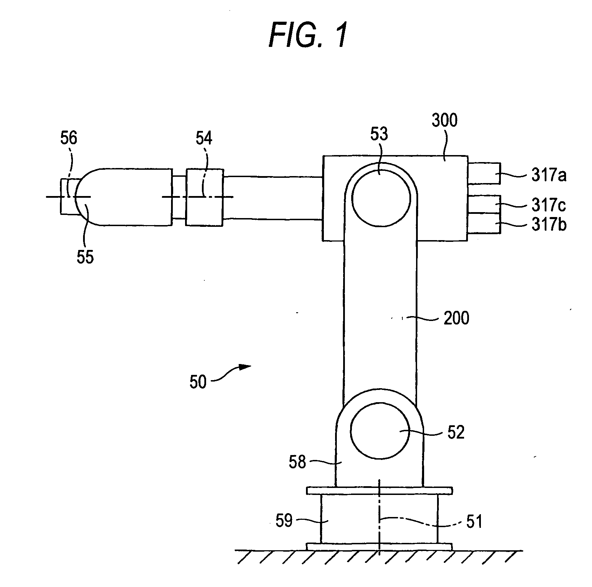

Fig. 1 is an entire view of an industrial robot 50. This industrial robot 50 includes a J1-axis articulated portion 51, a J2-axis articulated portion 52, a J3-axis articulated portion 53, a J4-axis articulated portion 54, a J5-axis articulated portion 55 and a J6-axis articulated portion 55, to which speed reducers are individually attached. A base end arm 58 (or a turning head) is so attached to a base 59 as can turn on the J1-axis articulated portion 51. A later-described first arm 200 is so attached to the base end arm 58 as can turn on the J2-axis articulated portion 52.

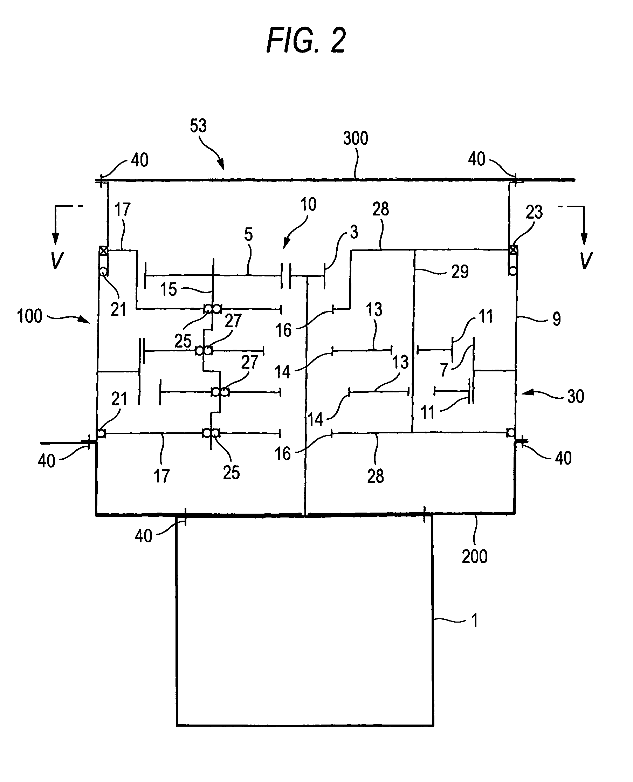

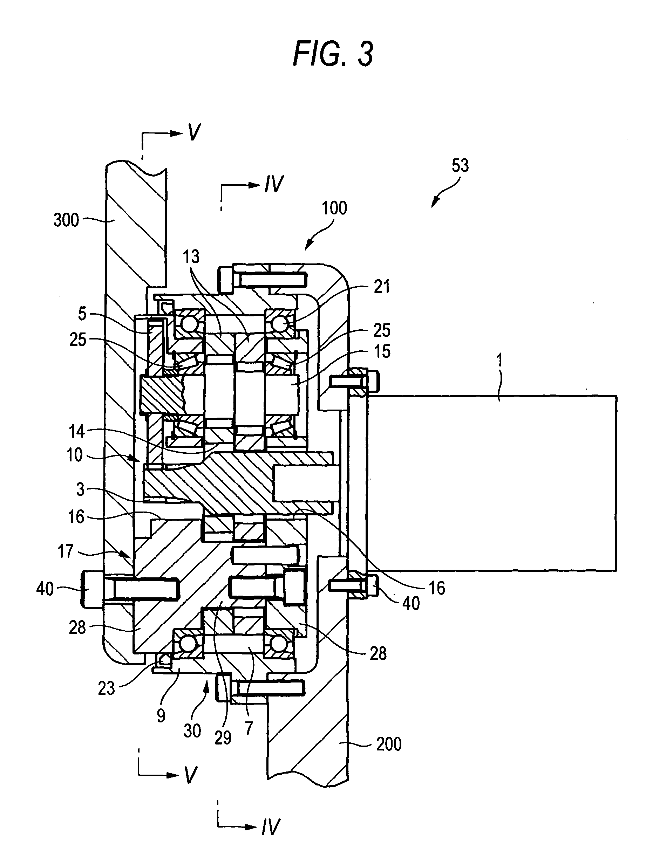

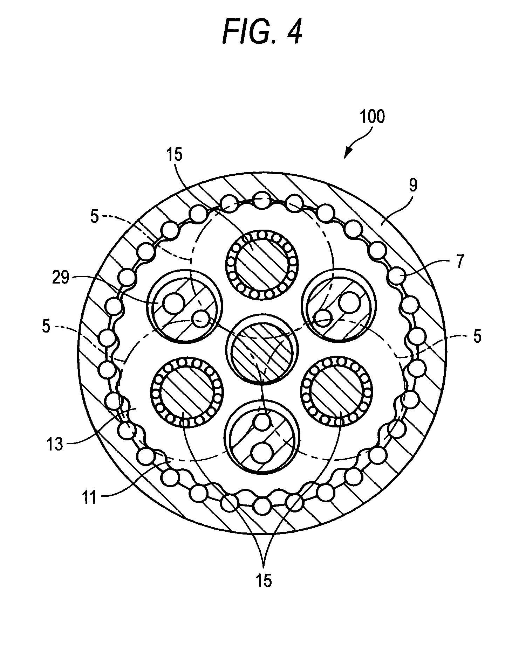

Fig. 2 is a diagram showing a sectional structure of a speed reducer attached to the J3-axis articulated portion of the industrial robot according to the first embodiment of the invention. Fig. 3 is a view expressing the diagram of Fig. 2 in the specific structure so as to assist the understanding of Fig. 2. Fig. 4 is a sectional view taken along arrows IV - IV of Fig. 3. In Fig. 2, Fig. 3 and Fig. 4, a speed reducer 100 and an electric motor 1 are attached to the J3-axis articulated portion 53 of the industrial robot 50, in which the first arm 200 and a second arm 300 rotate relative to each other. The speed reducer 100 is constituted to include a first-stage reduction gear mechanism (or a front-stage reduction gear mechanism) 10 and a second-stage reduction gear mechanism (or a rear-stage reduction gear mechanism) 30 for reducing the speed from the electric motor 1.
The first-stage reduction gear mechanism 10 is constituted to include a first input gear unit 3, and a spur gear type speed reducer having three second spur gears individually meshing with the first input shaft unit 3 and equally arranged around the first input gear unit 3. The second-stage reduction gear mechanism 30 is an eccentrically rocking type speed reducer including: an internal gear member 9 having internal teeth 7 of a plurality pins as internal teeth; two external gear members 13 having external teeth 11 meshing with the internal teeth 7 of the internal gear member 9; three crankshafts 15 having the second spur gears 5 individually and engaging with the external gear members 13 for rocking the external gear members 13 eccentrically of the internal gear member 9; and a support member 17 for supporting the three crankshafts 15.
The case of the electric motor 1 and the internal gear member 9 are attached to the first arm 200 by means of bolts 40. The support member 17 is attached to the second arm 300 by the bolts 40.

The speed reducer 100 is attached to the J3-axis articulated portion 53 of the industrial robot, which rotates, when the input speed to the first input gear unit 3 is 2,000 RPM or higher (or the speed of the output shaft of the electric motor 1 is 2,000 RPM or higher), the output, as coming from the eccentric rocking type speed reducer, (in this embodiment, the internal gear member 9 is fixed, and the output rotation is extracted from the support member 17), at 20 RPM or higher. In order that the individual crankshafts 15 may rotate under 1, 000 RPM when the eccentric rocking type speed reducer outputs an output of 20 RPM or higher, the reduction ratio of the first-stage reduction gear mechanism 10 (or the reduction ratio between the first input gear unit 3 and the second spur gear 5) is selected from 1/3 to 1/6.5, and the reduction ratio of the second-stage reduction gear mechanism 30 (or the ratio between the speed of the crankshaft 15 and the output speed of the support member 17) is selected from 1/20 to 1/60, so that the total reduction ratio or the product of the reduction ratio of the first-stage reduction gear mechanism 10 and the reduction ratio of the second-stage reduction gear mechanism 30 is set to 1/90 to 1/300.
For specific settings, for example, in case the motor speed (or the input speed to the first-stage reduction gear mechanism) is 3,000 RPM whereas the final output speed of the second-stage speed reducer is 30 RPM, the total reduction ratio is about 1/100. If the reduction ratio of the first-stage reduction gear mechanism is 1/3.6, the reduction ratio of the second-stage reduction gear mechanism is 1/28, so that the crank speed is as low as 833 RPM (= 3000/3.6) to restrict the heat generation.

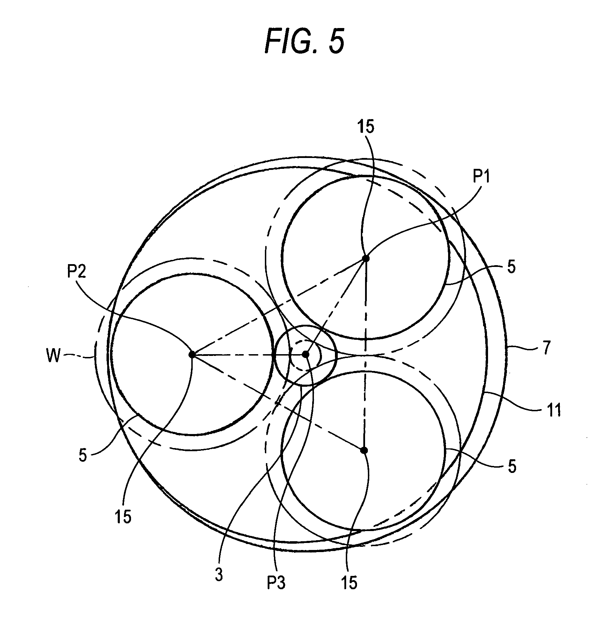

Fig. 5 is a diagram showing the individual sections of arrows V - V of Fig. 2 and Fig. 3 schematically. As shown by double-dotted lines W in Fig. 5, the tooth pitch circle sizes of the second spur gears are one half, at the maximum, of the rotation center distance of the crankshafts 15 (having the rotation centers designated by 15). The tooth pitch circle size of the first input gear unit 3 is arranged at the center of the tooth pitch circle sizes of the three second spur gears 5. Therefore, the maximum of the ratios between the tooth pitch circuit radius of the second spur gears 5 and the tooth pitch circuit radius of the input gear unit 3 can be so determined from trigonometric functions on a triangle (P1-P2-P3), which is defined by the two ends (P1 and P2) of the individual crankshaft distances and the crank joining center (or the rotation center of the first input gear unit 3) P3, as has a theoretical value of 6.46 times.
As described above, the spur gear type speed reducer according to the first embodiment of the invention is constituted to include the first input gear unit 3, and the three second spur gears 5 which mesh with the first input gear unit 3 individually and which are individually disposed at the three crankshafts and arranged around the first input gear unit 3. In this spur gear type speed reducer, the maximum reduction ratio, as obtained by the first input gear unit 3 and the three second spur gears 5, is limited by 1/6.5 how the tooth shapes might be modified. Therefore, the upper limit of the reduction ratio of the first-stage reduction gear mechanism 10 is 1/6.5.
In order to rotate the individual crankshafts 5 at a speed lower than 1,000 RPM, it is the better that the reduction ratio of the first-stage reduction gear mechanism 10 is the higher. Considering the practically preferred lower limit and the restricted upper limit, however, the reduction ration of the first-stage reduction gear mechanism 10 is selected within a range of 1/3 to 1/6.5.
In case the input speed of the first input gear unit 3 is set to 2,000 RPM or higher so that the output from the eccentric rocking type speed reducer is 20 RPM or higher, it is thought that the total reduction ratio or the product of the reduction ratio of the first-stage reduction gear mechanism 10 and the reduction ratio of the second-stage reduction gear mechanism 30 at the articulated portion of the industrial robot is from about 1/90 to about 1/300. If the reduction ratio of the second-stage reduction gear mechanism 30 is selected from 1/20 to 1/60 in this case, the total reduction ratio is satisfied in relation to the reduction ratio of the first-stage reduction gear mechanism 10.

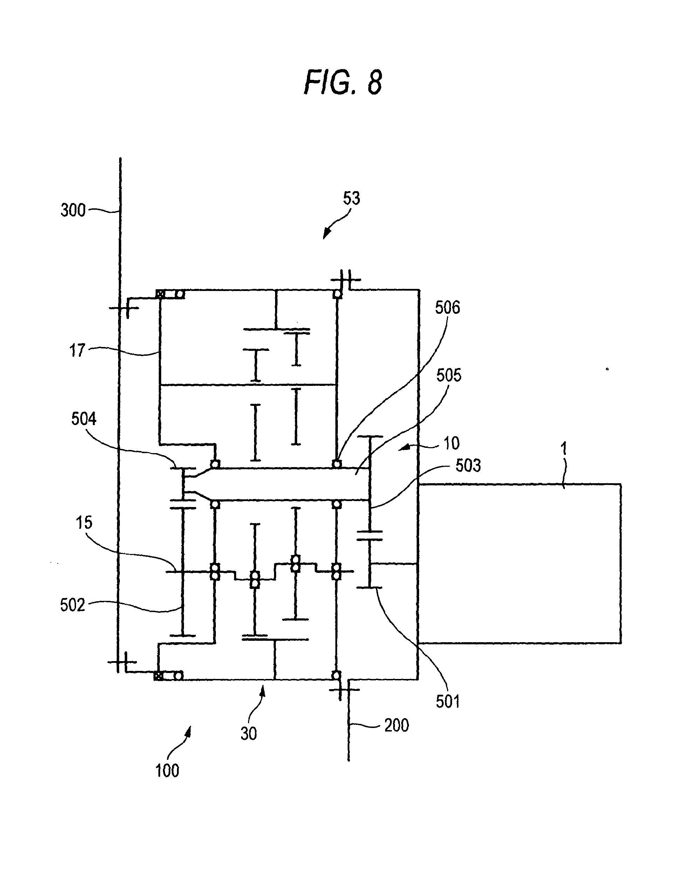

A roller bearing 21 is interposed between the support member 17 and the internal gear member 9 thereby to allow them to rotate relative to each other. A seal member 23 is interposed between the support member 17 and the internal gear member 9 thereby to prevent the grease or lubricant in the speed reducer from leaking therefrom to the outside. Roller bearings 25 are interposed between the crankshafts 15 and the support member 17 thereby to allow them to rotate relative to each other. Roller bearings 27 are interposed between the crankshafts 15 and the external gear member 11 thereby to allow them to rotate relative to each other. The support member 17 is constituted of a pair of plate-shaped portions 28 and a column portion 29 joining the paired plate-shaped portions 28. These paired plate-shaped portions 28 have hollow holes 16. The external gear member 11 has a hollow hole 14.
Here in this embodiment, the internal gear member 9 is fixed, and the output rotation is extracted from the support member 17. In another mode, however, the support member 17 is fixed, and the output rotation may be extracted from the internal gear member 9. Moreover, the reduction gear mechanisms can also be attached to the individual J1, J2, J4, J5 and J6 articulated portions of the industrial robot.
As will be described with reference to Fig. 8, the first-stage reduction gear mechanism 10 can also be formed into a two-stage structure. With this two-stage structure, the reduction ratio of the first-stage reduction gear mechanism 10 can be set to 1/12 higher than 1/6.5 thereby to cope with the higher input speed to the first-stage reduction gear mechanism 10.
Thus, the reduction ratio of the first-stage reduction gear mechanism is selected to limit the speed of the crankshaft to lower than 1,000 RPM. Even if, therefore, the reduction gear mechanism is attached to the articulated portion of the industrial robot thereby to increase the input speed or the output speed to or from the speed reducer, the heat liberation from the crankshafts can be suppressed to prevent the lifetime from becoming short.

When the input speed of the first input gear unit 3 is 2,000 RPM to 4,000 RPM, the eccentric rocking type speed reducer having an output of 20 RPM to 40 RPM is attached to the articulated portion of the industrial robot. In order that the individual crankshafts 15 may rotate at a speed below 1,000 RPM when the output from the eccentric rocking type speed reducer is 20 RPM to 40 RPM, the reduction ratio of the first-stage reduction gear mechanism 10 (or the reduction ratio between the first input gear unit 3 and the second spur gear 5) is selected within the range of 1/3 to 1/6.5, and the reduction ratio of the second-stage reduction gear mechanism 30 (or the ratio of the speed of the crankshafts 15 to the output speed of the support member 17) is selected within the range of 1/20 to 1/60, so that the total reduction ratio or the product of the reduction ratio of the first-stage reduction gear mechanism 10 and the reduction ratio of the second-stage reduction gear mechanism 30 is set within the range of 1/90 to 1/200.
In case the speed reducer is to be used for the specific settings, in which the motor speed (or the input speed of the first-stage reduction gear mechanism) is 4,000 RPM and in which the final output speed of the second-stage speed reducer is 35 RPM, the total reduction ratio is about 1/114. If the reduction ratio of the first-stage reduction gear mechanism is 1/4.5, the reduction ratio of the second-stage reduction gear mechanism is 1/25, so that the crank speed is as low as 889 RPM (= 4,000/4.5) so that the heat liberation is restricted.
In case the eccentric rocking type speed reducer is rotated with an output of 20 RPM to 40 RPM by setting the input speed to the first input gear unit 3 to 2,000 RPM to 4,000 RPM, it is thought that the total reduction ratio or the product of the first-stage reduction gear mechanism 10 and the second-stage reduction gear mechanism 30 at the articulated portion of the industrial robot is from about 1/90 to about 1/200. If the reduction ratio of the second-stage reduction gear mechanism 30 is selected in this case within a range of 1/20 to 1/60, the total reduction ratio can be sufficed in relation to the reduction ratio of the first-stage reduction gear mechanism 10. Thus, the reduction ratio of the first-stage reduction gear mechanism 10 is so selected that the rotations of the crankshafts may not exceed 1, 000 RPM. Even in case, therefore, the reduction gear mechanism is attached to the articulated portion of the industrial robot thereby to raise the input speed or the output speed of the speed reducer, the heat liberation from the crankshafts can be suppressed to prevent the lifetime from becoming short.

When the input speed of the first input gear unit 3 is 4,001 RPM to 6,000 RPM, the eccentric rocking type speed reducer having an output of 20 RPM to 40 RPM is attached to the articulated portion of the industrial robot. In order that the individual crankshafts 15 may rotate at a speed below 1,000 RPM when the output from the eccentric rocking type speed reducer is 20 RPM to 40 RPM, the reduction ratio of the first-stage reduction gear mechanism 10 (or the reduction ratio between the first input gear unit 3 and the second spur gear 5) is selected within the range of 1/3 to 1/6.5, and the reduction ratio of the second-stage reduction gear mechanism 30 (or the ratio of the speed of the crankshafts 15 to the output speed of the support member 17) is selected within the range of 1/20 to 1/60, so that the total reduction ratio or the product of the reduction ratio of the first-stage reduction gear mechanism 10 and the reduction ratio of the second-stage reduction gear mechanism 30 is set within the range of 1/150 to 1/300.
In case the speed reducer is to be used for the specific settings, in which the motor speed (or the input speed of the first-stage reduction gear mechanism) is 6,000 RPM and in which the final output speed of the second-stage speed reducer is 40 RPM, the total reduction ratio is about 1/150. If the reduction ratio of the first-stage reduction gear mechanism is 1/6.3, the reduction ratio of the second-stage reduction gear mechanism is 1/24, so that the crank speed is as low as 952 RPM (= 6,000/6.3) so that the heat liberation is restricted.
In case the eccentric rocking type speed reducer is rotated with an output of 20 RPM to 40 RPM by setting the input speed to the first input gear unit 3 to 4,001 RPM to 6,000 RPM, it is thought that the total reduction ratio or the product of the first-stage reduction gear mechanism 10 and the second-stage reduction gear mechanism 30 at the articulated portion of the industrial robot is from about 1/150 to about 1/300. If the reduction ratio of the second-stage reduction gear mechanism 30 is selected in this case within a range of 1/20 to 1/60, the total reduction ratio can be sufficed in relation to the reduction ratio of the first-stage reduction gear mechanism 10.
Thus, the reduction ratio of the first-stage reduction gear mechanism is so selected that the rotations of the crankshafts may not exceed 1,000 RPM. Even in case, therefore, the reduction gear mechanism is attached to the articulated portion of the industrial robot thereby to raise the input speed or the output speed of the speed reducer, the heat liberation from the crankshafts can be suppressed to prevent the lifetime from becoming short.

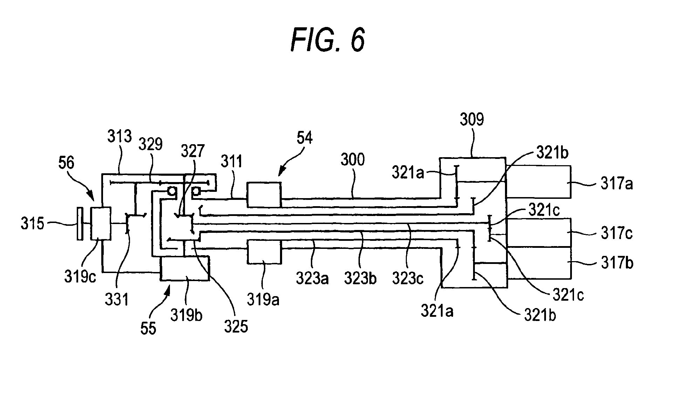

Next, the structure of the leading end portion of the articulated type industrial robot, i.e., the drive system of the J4- to J6-axis articulated portions 54, 55 and 56 in front of the second arm 300 is described with reference to Fig. 6.
The three actions (i.e., the later-described twisting, deflecting and turning actions) of the robot leading end portion are driven by the three electric motors and two-stage reduction type speed reducers arranged at the J4-axis articulated portion 54, the J5-axis articulated portion 55 and the J6-axis articulated portion 56.
A rotation axis arm 311 can be turned (for the twisting motions) with respect to a second arm base 309 by the J4-axis articulated portion 54. A wrist portion 313 is attached to the leading end of the rotation axis arm 311, and can be turned (for the twisting motions) by the J5-axis articulated portion 55.
A grip portion 315 is attached to the leading end of the wrist portion 313 and can be turned (for the turning motions) by the J6-axis articulated portion 56. A grip device, as disposed at the grip portion 315, grips a work (although not shown) removably. At the leading end of the wrist portion 313, there are provided six degrees of freedom for transferring and positioning the work freely. The rotation axis portions constituting the six freedom degrees drive the drive units precisely by reducing the speeds of the motors, with the individual motors and the two-stage speed reducing type speed reducers, to which the rotations of the motors are inputted, according to the invention.

The second arm base 309 is provided with three motors 317a, 317b and 317c, to which two-stage speed reducing type speed reducers 319a, 319b and 319c are individually connected through transmission gears. The rotations of the individual motors are transmitted through individual pairs of spur gears 321a, 321b and 321c to three transmission shafts 323a, 323b and 323c arranged concentrically. Of these, the rotations of the outermost transmission shaft 323a are transmitted through the two-stage speed reducing type speed reducer 319a to the rotation axis arm 311 thereby to bear the motions of the J4-axis articulated portion. The rotations of the intermediate transmission shaft 323b is transmitted through a transmission bevel gear 325 to the two-stage speed reducing type speed reducer 319b so that it is converted into a turning motion on the J4-axis articulated portion or the rotation shaft perpendicular to the J4-axis articulated portion of the wrist portion 313. The rotations of the innermost transmission shaft 323c are transmitted through a transmission bevel gear 327, a pair of transmission spur gears 329 and a transmission bevel gear 331 to the two-stage speed reducing type speed reducer 319c attached to the leading end of the wrist portion 313. The grip portion 315 is reduced in speed by the two-stage speed reducing type speed reducer 319c so that it performs the turning motions on the J6-axis.
In case the input speeds to the first-stage speed reducers of the individual two-stage speed reducing type speed reducers 319a, 319b and 319c are 4, 000 RPM to 6, 000 RPM, or 6,001 RPM or higher and in case the outputs from the eccentric rocking type speed reducers are 20 RPM to 60 RPM, or 61 RPM or higher, it is preferred that the maximum speed of the crankshafts is set to 1,000 RPM or lower, or to 900 RPM or lower by setting the reduction ratio of the first-stage reduction gear mechanism to 1/3 to 1/6.5 and by setting the reduction ratio of the second-stage reduction gear mechanism to 1/20 to 1/50 thereby to set the total reduction ratio to 1/90 to 1/300.

Here are described the constitution of the two-stage speed reducing type speed reducer, which is optimum for the applying/using conditions in the six articulated portions (of the J1-axis, J2-axis, J3-axis, J4-axis, J5-axis and J6-axis).

The industrial robot for performing a spot welding operation, an arc welding operation and an assembling operation has a short movement between the operations and a short drive time at the highest speed. Therefore, it is sufficient to set the reduction ratio of a front-stage speed reducer so that the average speed of the crankshafts of the second-stage reduction gear mechanism on the J1-, J2- and J3-axes may be set to 1, 000 RPM or lower during the operations.
In the industrial robot for performing a painting operation or a transferring operation, however, the electric motors are often driven during the operations at high speeds for a long time, and a high load is often applied at the work gripping time. In this case, high loads are applied to the crankshafts of the rear stage reduction gear mechanism thereby to increase the heat liberation. It is, therefore, preferred that the maximum speed of the crankshafts is set to 900 RPM or lower, thereby to suppress the heat liberation at the crankshaft portions. In this case, therefore, the reduction ratio of the front-stage speed reducer may be set to set the maximum speed of the crankshafts to 900 RPM or lower.
In short, it is preferred on the J1-, J2- and J3-axes of the industrial robot for performing the painting operation and the transferring operation that the maximum speed of the crankshafts of the rear-stage reduction gear mechanism is set to 900 RPM.

In the industrial robot for performing the spot welding operation, the arc welding operation and the assembling operation, the low-speed operations and the high-speed quick operations on the J4-, J5- and J6-axes are required, and the electric motors are driven at a high speed continuously for a long time, so that the heat liberation at the crankshafts of the rear-stage reduction gear mechanism are prominent. It is, therefore, preferred that the heat liberation is suppressed at those crankshafts by setting the maximum speed of the crankshafts to 900 RPM or lower. In this case, therefore, the reduction ratio of the front-stage speed reducer may be set to set the maximum speed of the crankshafts to 900 RPM or lower.
In short, on the J4-, J5- and J6-axes of the industrial robot for performing the spot welding operation, the arc welding operation and the assembling operation, it is preferred that the maximum speed of the crankshafts of the rear-stage reduction gear mechanism is set to 900 RPM or lower.
Moreover, the electric motors can be made small and exemplified by high-speed electric motors so that the second arm portion can be made light to reduce the loads on the J1-, J2- and J3-axes.

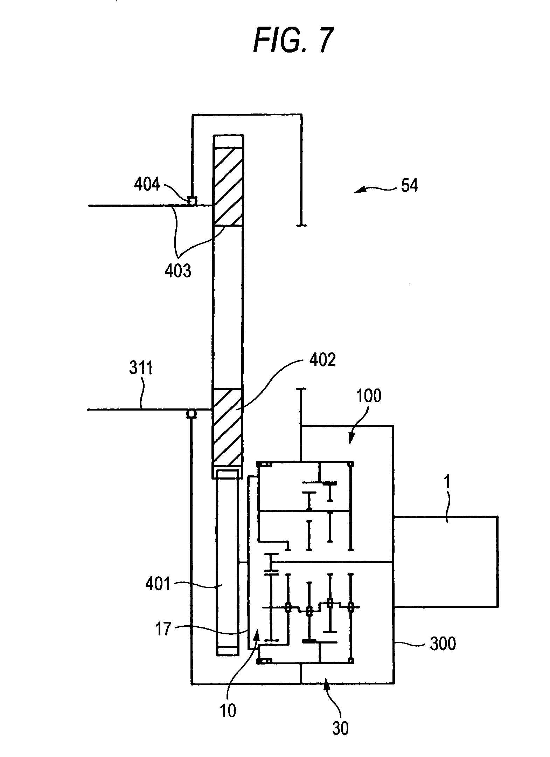

Next, a speed reducer, as attached to the J4-axis articulated portion of an industrial robot according to a second embodiment of the invention is described with reference to Fig. 7. The speed reducer is further provided with a spur gear type reduction gear mechanism on the final output side of the speed reducer according to the first embodiment. The same portions as those of the structure of the speed reducer according to the first embodiment are designated by the common reference numerals, and their descriptions are omitted.
The speed reducer 100 and the electric motor 1 are attached to the J4-axis articulated portion 54 of the industrial robot, at which the second arm 300 and the rotation axis arm 311 turn relative to each other. The speed reducer 100 and the electric motor 1 are so disposed in the second arm 300 that they are shifted from the rotation axis of the rotation axis arm 311. This rotation axis arm 311 is turnably supported by a bearing 404.
The speed reducer 100 is basically constituted of the first-stage reduction gear mechanism 10 and the second-stage reduction gear mechanism 30 for reducing the speed of the electric motor 1. A spur gear 401 is fixed in the support member 17 of the second-stage reduction gear mechanism 30. A spur gear 402 is fixed on the rotation axis arm 311 and meshes with the spur gear 401. The tooth portion of the spur gear 402 has a larger pitch circle diameter than that of the tooth portion of the spur gear 401 so that the rotations of the support member 17 are reduced in speed to 1/1.5 to 1/4 and transmitted to the rotation axis arm 311.
In this embodiment, in case the input speeds to the first-stage speed reducers are 2,000 RPM to 6, 000 or 6,001 or higher and in case the outputs from the eccentric rocking type speed reducers are 20 RPM to 60 RPM, or 61 RPM or higher, it is preferred that the maximum speed of the crankshafts is set to 1,000 RPM or lower, or to 900 RPM or lower by setting the reduction ratio of the first-stage reduction gear mechanism to 1/3 to 1/6.5 and by setting the reduction ratio of the second-stage reduction gear mechanism to 1/20 to 1/50 thereby to set the total reduction ratio to 1/90 to 1/300.
The spur gear 402, the second arm 300 and the rotation axis arm 311 are made hollow 403 in their rotation center portions so that the hollow portions 403 can accommodate the wiring, piping or the like needed by the industrial robot.

Next, a speed reducer, as attached to the J3-axis articulated portion of an industrial robot according to a third embodiment of the invention, is described with reference to Fig. 8. This speed reducer has the mode, in which a two-stage spur gear speed reducer is adopted in the first-stage reduction gear mechanism of the speed reducer according to the first embodiment. The same portions as those of the structure of the speed reducer according to the first embodiment are designated by the common reference numerals, and their descriptions are omitted.
The speed reducer 100 and the electric motor 1 are attached to the J3-axis articulated portion 53 of the industrial robot, at which the first arm 200 and the second arm 300 turn relative to each other. The speed reducer 100 is constituted to include the first-stage reduction gear mechanism 10 and the second-stage reduction gear mechanism 30 for reducing the speed of the electric motor 1. The first-stage reduction gear mechanism 10 is constituted to include a spur gear 501 fixed on the output shaft of the electric motor 1, a spur gear 502 fixed on the crankshaft 15, and an intermediate shaft 505 having a spur gear 503 and a spur gear 504. By making the first-stage reduction gear mechanism 10 into a two-stage structure, moreover, the reduction ratio of the first-stage reduction gear mechanism 10 can be reduced to the ratio of 1/12 larger than 1/6.5 so that the first-stage reduction gear mechanism 10 can cover a higher input speed.
The crankshaft 15 is rotatably supported on the support member 17 by a bearing 506. The spur gear 503 meshes with the spur gear 501, and the spur gear 505 meshes with the spur gear 502. The tooth portion of the spur gear 503 has a larger pitch circle diameter than that of the tooth portion of the spur gear 501, and the tooth portion of the spur gear 502 has a larger pitch circle diameter than that of the tooth portion of the spur gear 504. The rotations of the electric motor 1 are transmitted at a speed reduction of 1/2 to 1/5 to the intermediate shaft 505, the rotations of which are transmitted at a speed reduction of 1/2 to 1/5 to the crankshaft 15.
In this embodiment, in case the input speeds to the first-stage speed reducers are 4, 000 RPM to 6, 000 or 6, 001 or higher and in case the outputs from the eccentric rocking type speed reducers are 20 RPM to 60 RPM, or 61 RPM or higher, it is preferred that the maximum speed of the crankshafts is set to 1,000 RPM or lower, or to 900 RPM or lower by setting the reduction ratio of the first-stage reduction gear mechanism to 1/3 to 1/12 and by setting the reduction ratio of the second-stage reduction gear mechanism to 1/20 to 1/50 thereby to set the total reduction ratio to 1/90 to 1/500.

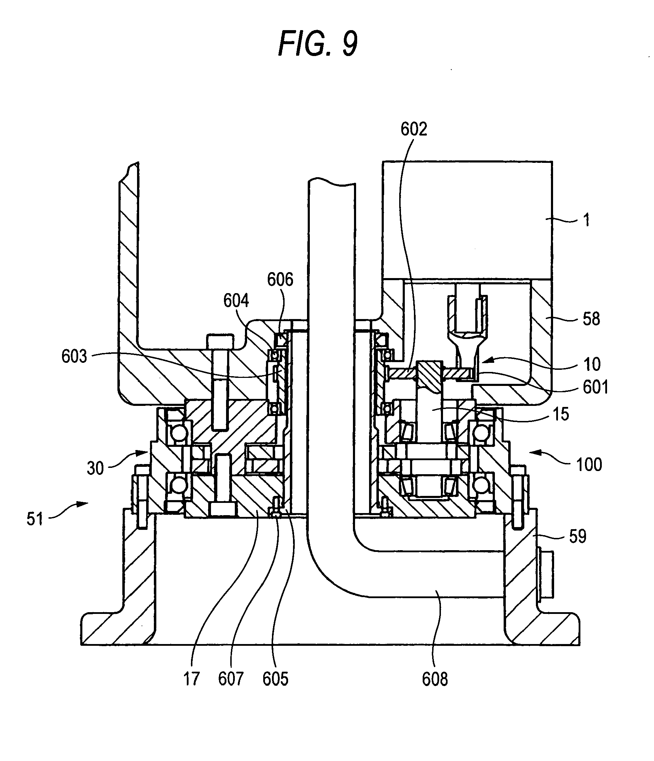

Next, a speed reducer, as attached to the J1-axis articulated portion of an industrial robot according to a fourth embodiment of the invention, is described with reference to Fig. 9. This speed reducer is such a modified mode of the speed reducer according to the first embodiment that the rotational driving force of the electric motor is transmitted only to one specific crankshaft. The same portions as those of the structure of the speed reducer according to the first embodiment are designated by the common reference numerals, and their descriptions are omitted.
The speed reducer 100 and the electric motor 1 are attached to the J1-axis articulated portion 51 of the industrial robot, at which the base end arm (or the turning head) and the base 59 turn relative to each other. The speed reducer 100 is constituted to include the first-stage reduction gear mechanism 10 and the second-stage reduction gear mechanism 30 for reducing the speed of the electric motor 1. The first-stage reduction gear mechanism 10 is constituted to include a spur gear 601 fixed on the output shaft of the electric motor 1, and a spur gear 602 fixed on only specific one crankshaft 15. As a result, the rotational driving force of the electric motor 1 is transmitted at first to only one specific crankshaft 15 of the second-stage reduction gear mechanism 30. The toot portion of the spur gear 602 has a larger pitch circle diameter than that of the tooth portion of the spur gear 601. The rotations of the electric motor 1 are transmitted at a speed reduction of 1/2 to 1/5 to the single crankshaft 15.
A hollow intermediate gear member 603 meshes with not only the spur gear spur gear 602 but also the (not-shown) spur gears different from the aforementioned spur gear 602 and mounted on the remaining two crankshafts (although not shown). As a result, the rotations transmitted to the internal gear member 603 are distributed and transmitted to the aforementioned tow crankshafts. The internal gear member 603 is rotatably borne on the base end arm 58 by means of a bearing 604. The hollow cylindrical cover 605 is sealed on the outer circumference of its one end by abutting against an oil seal 606 mounted on the base end arm 58, and is fixed and sealed at its other end on the support member 17 of the speed reducer 100 made rotatable with respect to the base 59. The cover 605 accommodates the wiring, piping or the like 608 needed by the industrial robot.
In this embodiment, in case the input speeds to the first-stage speed reducers are 2,000 RPM to 4,000 and in case the outputs from the eccentric rocking type speed reducers are 20 RPM to 60 RPM, it is preferred that the maximum speed of the crankshafts is set to 1,000 RPM or lower, or to 900 RPM or lower by setting the reduction ratio of the first-stage reduction gear mechanism to 1/3 to 1/6.5 and by setting the reduction ratio of the second-stage reduction gear mechanism to 1/20 to 1/40 thereby to set the total reduction ratio to 1/90 to 1/200.

Although the invention has been described in detail and in connection with its specific embodiments, it is apparent to those skilled in the art that various modifications and corrections could be added without departing from the spirit and scope of the invention.
This application is based on Japanese Patent Application (No. 2004-234559) filed on August 11, 2004, and its contents are incorporated herein by reference. Industrial Applicability

In a speed reducer to be attached to the articulated portion of an industrial robot, according to the invention, the reduction ratio of a first-stage reduction gear mechanism is selected to restrict the rotations of a crankshaft of an eccentric rocking type speed reducer or a second-stage reduction gear mechanism. Thus, the speed reducer is suppressed, even in case it is attached to the articulated portion of the industrial robot and enhanced in its input or output speed, in its heat liberation so that its lifetime is prevented from becoming short.

## Claims

1. A speed reducer to be attached to an articulated portion of an industrial robot, comprising a first-stage reduction gear mechanism and a second-stage reduction gear mechanism, wherein said first-stage reduction gear mechanism is a speed reducer for reducing the speed of rotations from a motor and transmitting the speed-reduced rotations to said second-stage reduction gear mechanism, wherein said second-stage reduction gear mechanism is an eccentric rocking type speed reducer including an internal gear member, an external gear member meshing with said internal gear member, a crankshaft engaging with said external gear member for eccentrically rocking said external gear member with respect to said internal gear member, and a support member for supporting said crankshaft rotatably, so that an output is extracted from said internal gear member or said support member, and wherein the output from said eccentric rocking type speed reducer is rotated at 20 RPM or higher, when the input speed of said first-stage reduction gear mechanism is 2,000 RPM or higher, **characterized in that** said crankshaft is rotated at a speed of 1,000 RPM or lower, when the output from said eccentric rocking type speed reducer is 20 RPM or higher.

2. A speed reducer to be attached to an articulated portion of an industrial robot, comprising a first-stage reduction gear mechanism and a second-stage reduction gear mechanism, wherein said first-stage reduction gear mechanism is a speed reducer for reducing the speed of rotations from a motor and transmitting the speed-reduced rotations to said second-stage reduction gear mechanism, wherein said second-stage reduction gear mechanism is an eccentric rocking type speed reducer including an internal gear member, an external gear member meshing with said internal gear member, a crankshaft engaging with said external gear member for eccentrically rocking said external gear member with respect to said internal gear member, and a support member for supporting said crankshaft rotatably, so that an output is extracted from said internal gear member or said support member, and wherein the output from said eccentric rocking type speed reducer is rotated at 20 RPM to 40 RPM, when the input speed of said first-stage reduction gear mechanism is 2,000 RPM to 4,000 RPM, **characterized in that** said crankshaft is rotated at a speed of 1,000 RPM or lower, when the output from said eccentric rocking type speed reducer is 20 RPM to 40 RPM.

3. A speed reducer to be attached to an articulated portion of an industrial robot, comprising a first-stage reduction gear mechanism and a second-stage reduction gear mechanism, wherein said first-stage reduction gear mechanism is a speed reducer for reducing the speed of rotations from a motor and transmitting the speed-reduced rotations to said second-stage reduction gear mechanism, wherein said second-stage reduction gear mechanism is an eccentric rocking type speed reducer including an internal gear member, an external gear member meshing with said internal gear member, a crankshaft engaging with said external gear member for eccentrically rocking said external gear member with respect to said internal gear member, and a support member for supporting said crankshaft rotatably, so that an output is extracted from said internal gear member or said support member, and wherein the output from said eccentric rocking type speed reducer is rotated at 20 RPM to 40 RPM, when the input speed of said first-stage reduction gear mechanism is 4,001 RPM to 6,000 RPM, **characterized in that** said crankshaft is rotated at a speed of 1,000 RPM or lower, when the output from said eccentric rocking type speed reducer is 20 RPM to 40 RPM.

4. A speed reducer to be attached to an articulated portion of an industrial robot, as set forth in claim 1, **characterized in that** said first-stage reduction gear mechanism has a reduction ratio of 1/3 to 1/6.5.

5. A speed reducer to be attached to an articulated portion of an industrial robot, as set forth in claim 4, **characterized in that** said second-stage reduction gear mechanism has a reduction ratio of 1/20 to 1/60.

6. A speed reducer to be attached to an articulated portion of an industrial robot, as set forth in claim 2, **characterized in that** said first-stage reduction gear mechanism has a reduction ratio of 1/3 to 1/6.5.

7. A speed reducer to be attached to an articulated portion of an industrial robot, as set forth in claim 6, **characterized in that** said second-stage reduction gear mechanism has a reduction ratio of 1/20 to 1/60.

8. A speed reducer to be attached to an articulated portion of an industrial robot, as set forth in claim 3, **characterized in that** said first-stage reduction gear mechanism has a reduction ratio of 1/3 to 1/6.5.

9. A speed reducer to be attached to an articulated portion of an industrial robot, as set forth in claim 8, **characterized in that** said second-stage reduction gear mechanism has a reduction ratio of 1/20 to 1/60.

10. A speed reducer to be attached to an articulated portion of an industrial robot, as set forth in claim 1, **characterized in that** the total reduction ratio or the product of the reduction ratio of said first-stage reduction gear mechanism and the reduction ratio of said second-stage reduction gear mechanism is 1/90 to 1/300.

11. A speed reducer to be attached to an articulated portion of an industrial robot, as set forth in claim 2, **characterized in that** the total reduction ratio or the product of the reduction ratio of said first-stage reduction gear mechanism and the reduction ratio of said second-stage reduction gear mechanism is 1/90 to 1/200.

12. A speed reducer to be attached to an articulated portion of an industrial robot, as set forth in claim 3, **characterized in that** the total reduction ratio or the product of the reduction ratio of said first-stage reduction gear mechanism and the reduction ratio of said second-stage reduction gear mechanism is 1/150 to 1/300.

13. A speed reducer to be attached to an articulated portion of an industrial robot, as set forth in claim 1, **characterized in that** the output from said eccentric rocking type speed reducer is 30 RPM to 40 RPM.

14. A speed reducer to be attached to an articulated portion of an industrial robot, as set forth in claim 2, **characterized in that** the output from said eccentric rocking type speed reducer is 30 RPM to 40 RPM.

15. A speed reducer to be attached to an articulated portion of an industrial robot, as set forth in claim 3, **characterized in that** the output from said eccentric rocking type speed reducer is 30 RPM to 40 RPM.
